# EUROPEAN PATENT SPECIFICATION

(11) **EP 1 383 122 B1**
(45) Date of publication and mention of the grant of the patent: **24.09.2008**
(21) Application number: 03016309.1
(22) Date of filing: 18.07.2003
(51) Int. Cl.: G11B 17/038, G11B 17/02

(54) **Disk clamp of hard disk drive**
Plattenklemmvorrichtung für Plattengerät
Dispositif de serrage de disque pour appareil à disque

(30) Priority: 19.07.2002 KR 2002042488
(43) Date of publication of application: 21.01.2004
(73) Proprietor: SAMSUNG ELECTRONICS CO., LTD., Suwon-City, Kyungki-do (KR)
(72) Inventor: Kim, Kwang-Kyu, Kwonseon-gu, Suwon-si, Gyeonggi-do (KR); Lee, Haeng-soo, Suwon-si, Gyeonggi-do (KR)
(74) Representative: Grünecker, Kinkeldey, Stockmair & Schwanhäusser Anwaltssozietät

(56) References cited:
- US-A- 5 490 024
- US-A- 5 528 434

## Description

### BACKGROUND OF THE INVENTION

The present invention relates to a disk clamp of a hard disk drive, and more particularly, to a disk clamp of a hard disk drive in which stress applied to a disk can be distributed uniformly in a radial direction.

**Document** US 5528434 A **discloses a disc clamp with integrated stiffener for hard disc drives.**

**Document** US 5490024 A **teaches a disc clamp having an annular section of increased rigidity.**

Hard disk drives (HDDs) are auxiliary memory devices of a computer which records and reproduces data on and from a disk by using a magnetic head.

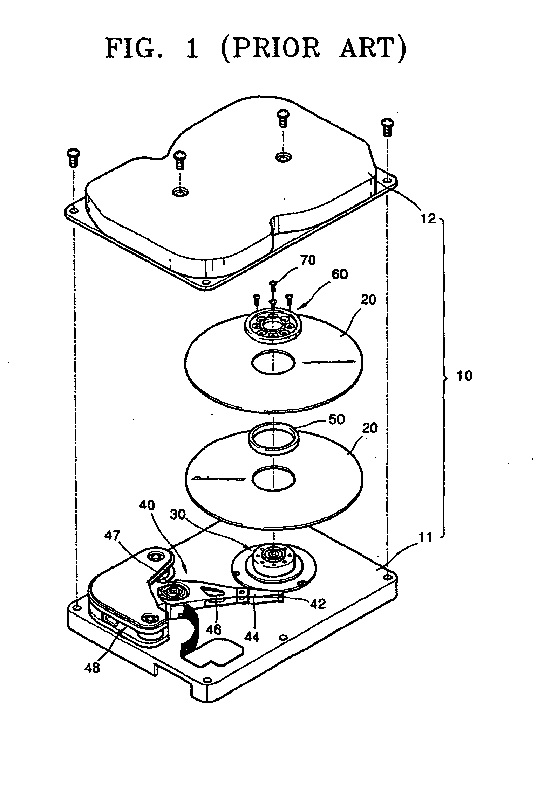

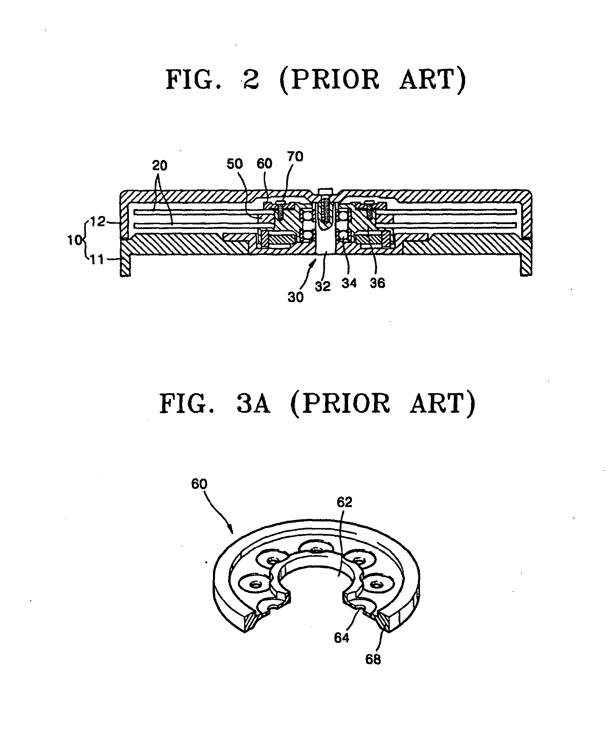

FIG. 1 is an exploded perspective view illustrating a conventional hard disk drive. FIG. 2 is a vertical sectional view of the hard disk drive shown in FIG. 1.

Referring to the drawings, the hard disk drive includes a housing 10, a spindle motor 30 installed in the housing 10 and rotating a magnetic disk (hard disk) 20, and an actuator 40 having a magnetic head for recording data on the disk 20 and reproducing data from the disk 20.

The housing 10 installed in a main body of a computer includes a base plate 11 for supporting the spindle motor 30 and the actuator 40, and a cover plate 12 coupled to the upper portion of the base plate 11 and protecting the disk 20 by encompassing it. Typically, the housing 10 is made of stainless steel or aluminum.

The spindle motor 30 for rotating the disk 20 is installed on the base plate 11. A shaft 32 of the spindle motor 30 is fixedly installed. A hub 36 is rotatably installed at the outer circumference of the shaft 32 generally by interposing a bearing 34 between the hub 36 and the shaft 32. The disk 20 is inserted around the outer circumference of the hub 36.

The disk 20 is a recording medium for recording data and one or a plurality of disks can be installed by being separated a predetermined distance from each other to be rotatable by the spindle motor 30. When a plurality of the disks 20 are installed at the spindle motor 30, a ring type spacer 50 is inserted between the disks 20 to maintain a gap between the disks 20. A disk clamp 60 for firmly fixing the disks 20 to the spindle motor 30 is coupled to an upper end portion of the spindle motor 30 by a screw 70.

The actuator 40 can be rotated by a voice coil motor 48 around a pivot shaft 47 installed on the base plate 11. The actuator 40 includes an arm 46 coupled to
the pivot shaft 47 to be capable of pivoting and a suspension 44 installed at the arm
46 and supporting a slider 42 on which a magnetic head (not shown) is mounted to
be elastically biased toward a surface of the disk 20. When the power is turned on
and the disk 20 begins to start, a lifting force by air pressure is generated and accordingly the slider 42 is lifted. Since the slider 42 is lifted at a height where the lifting force by the rotation of the disk 20 and an elastic force by the suspension 44 are balanced, the magnetic head mounted on the slider 42 maintains a predetermined distance with the disk 20 that is rotating and records and reproduces data with respect to the disk 20.

In the hard disk drive, data recording and reproduction is carried out by the magnetic head lifted above the disk 20 which rotates at a high speed, at a very small interval from the disk 20. Thus, a defect in the flatness of the disk 20 itself or a defect in the flatness of the disk 20 generated in an assembly step may be a major factor which causes an error signal when data is recorded on or reproduced from the disk 20. In particular, the defect in the flatness of the disk 20 generated in the assembly step is caused by irregular distribution of stress applied to the disk 20 by the disk clamp 60.

FIG. 3A shows an example of the conventional disk clamp. Referring to the drawing, an opening 62 is formed at the center of the disk clamp 60 and a plurality of screw coupling holes 64 are concentrically formed outside the opening 62. When eight screw coupling holes 64 are provided, for example, screws are coupled to every other screw coupling holes 64 so that a total of four screw coupling holes 64 are coupled by the screws. A pressing portion 68 for pressing the upper surface of the disk 20 in a vertical direction is formed at the outer circumferential portion of the disk clamp 60.

When the disk clamp 60 is coupled to the spindle motor 30, stress due to a clamping force by the screws is applied to a contact portion (not shown) between the pressing portion 68 of the disk clamp 60 and the disk 20. Here, the stress concentrates on the screwed portion and the stress is directly transferred to the disk 20. Thus, the stress applied to the disk 20 is not uniformly distributed in the circumferential direction. As a result, waviness is generated in the disk 20 so that the flatness of the disk 20 is deteriorated.

The defect in the flatness of the disk due to the irregular distribution of the stress increases repeatable run out (RRO) during the rotation of the disk. At last, an unscrewing phenomenon or a disk slip phenomenon may occur when a mechanical impact or thermal impact is received.

The disk clamp 60 having the above shape is manufactured by mechanically processing metal, for example, stainless steel or aluminum alloy.

FIG. 3B shows another example of the conventional disk clamp. Referring to the drawing, a disk clamp 80 includes an opening portion 80, a screw coupling hole 84, and a vertical pressing portion 88, like the disk clamp 60 shown in FIG. 3A.
Since the disk clamp 80 can be manufactured by press processing, the manufacturing cost is lower than that of the disk clamp 60 of FIG. 3A which is manufactured by mechanical processing. However, the disk clamp 80 shown in FIG. 3B also generates an irregular stress distribution in the disk.

FIGS. 4A and 4B are a perspective view illustrating yet another example of the conventional disk clamp and a vertical section view taken along line A-A of FIG. 4A, respectively.

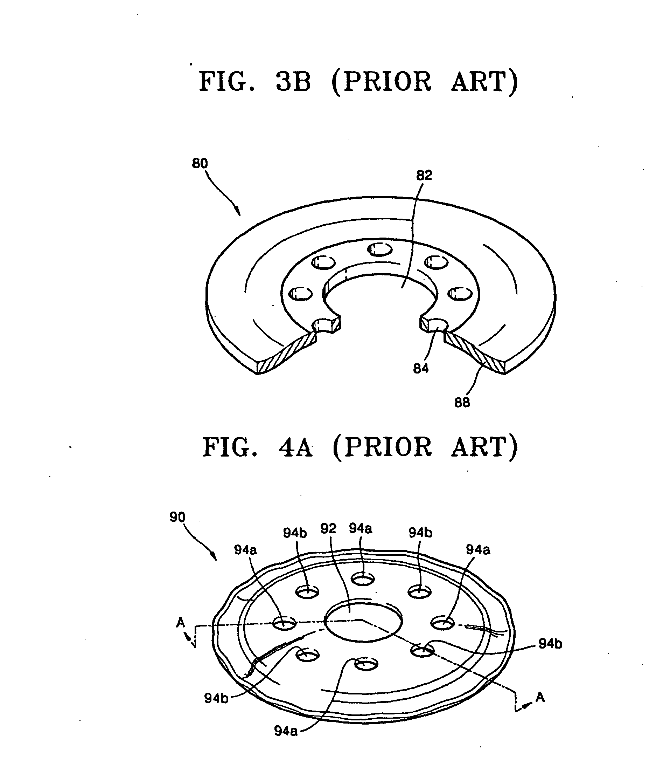

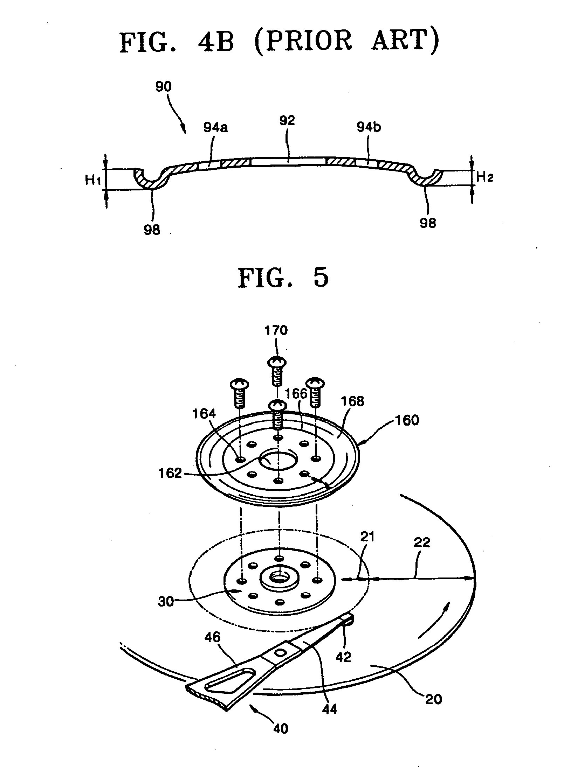

A disk clamp 90 shown in FIGS. 4A and 4B is developed to solve the problem of the above conventional disk clamp. The disk clamp 90 includes an opening portion 92, a plurality of screw coupling holes 94a and 94b, and a pressing portion 98. However, the pressing portion 98 formed at the outer edge portion of the disk clamp 90 has a profile having a curved shape bulged downward, that is, toward the disk. Also, the center portion of the disk clamp 90 has a dome shape slightly bulged upward. The height of the outer circumference of the pressing portion 98 varies according to the position of the screw coupling holes 94a and 94b. That is, when four screws are coupled to every other screw coupling holes 94a or 94b, a height H₁ of the outer circumferential portion outside the screw coupling holes 94a where screws are coupled is formed to be greater than a height H₂ of the outer circumferential portion outside the screw coupling holes 94b where screws are not coupled. Thus, the height of the outer circumferential portion of the pressing portion 98 repeats being high and low at an interval of 90°.

In the above disk clamp 90, since the rigidity of the pressing portion 98 varies according to the position, a difference in stress between the screwed portion and the unscrewed portion can be compensated. Thus, the stress applied to the disk is uniformly distributed in the circumferential direction to a degree.

However, in the disk clamp 90 having the above structure, since the portion on which stress concentrates varies according to the number of the coupled screws, the height of the outer circumference of the pressing portion 98 should be designed differently according to the change in a clamping force of the screw. Thus, such a disk clamp is difficult to design and manufacture and is not available to be commonly used for various types of hard disk drives.

To solve the above and other problems, the present invention provides a disk clamp of a hard disk drive having a stress distribution portion which is bulged upward so that stress applied to the disk can be uniformly distributed in the circumferential direction of the disk.

According to an aspect of the present invention, a disk clamp of a hard disk drive for fixing a magnetic disk for storing data to a spindle motor of the hard disk drive, the disk clamp comprising a pressing portion formed along an outer circumference of the disk clamp at around an edge portion, to press an upper surface of the disk in a vertical direction, a stress distribution portion formed inside the pressing portion to have a profile having a curved shape bulged upward to distribute stress applied to the disk, and a plurality of screw coupling holes into which screws are inserted to be coupled to an upper end portion of the spindle motor and provided at a predetermined distance in the circumferential direction inside the stress distribution portion.

The pressing portion has a profile having a curved shape bulged downward. A radius of the curve of the stress distribution portion is greater than or equal to a radius of the curve of the pressing portion.

The pressing portion is continuously formed at the stress distribution portion.

The disk clamp has the same thickness throughout the entire portion of the disk clamp.

The disk clamp has a dome shape whose center portion is bulged upward as a whole and, when the disk clamp is coupled to the spindle motor by the screws, the disk clamp is made flat as a whole.
The disk clamp is manufactured by press processing a metal material having a predetermined elasticity.

Thus, since the stress applied to the disk is uniformly distributed in the circumferential direction of the disk by the stress distribution portion, flatness of the disk is improved.

The above features of the present invention will become more apparent by describing in detail preferred embodiments thereof with reference to the attached drawings in which:
FIG. 1 is an exploded perspective view illustrating a conventional hard disk drive;
FIG. 2 is a vertical sectional view illustrating the hard disk drive of FIG. 1;
FIG. 3A is a partially cut-away perspective view illustrating an example of the conventional disk clamp;
FIG. 3B is a partially cut-away perspective view illustrating another example of the conventional disk clamp;
FIGS. 4A and 4B are a perspective view illustrating yet another example of the conventional hard disk drive and a vertical sectional view taken along line A-A of FIG. 4A;
FIG. 5 is a perspective view illustrating a disk clamp portion of a hard disk drive according to the present invention;

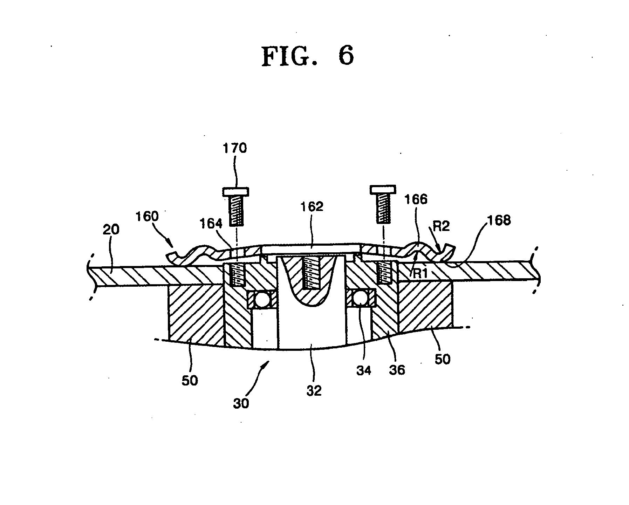

FIG. 6 is a vertical sectional view illustrating a disk clamp portion shown in FIG. 5, which shows a state before the screw is coupled to the spindle motor;

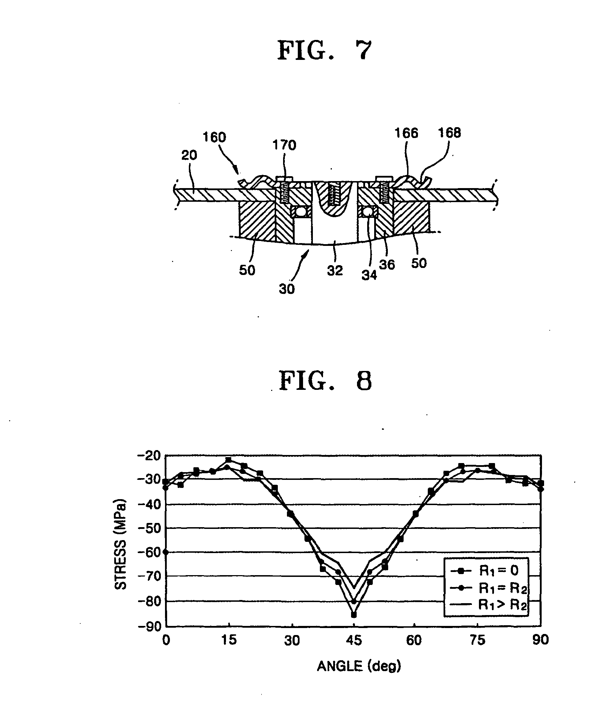

FIG. 7 is a vertical sectional view illustrating a disk clamp portion shown in FIG. 5, which shows a state after the screw is coupled to the spindle motor; and
FIG. 8 is a graph showing the distribution of the stress acting on the disk by the disk clamp in a direction of the circumference of the disk between the present invention and the conventional technology.

Referring to FIGS. 5 and 6, a hard disk drive typically includes at least one disk 20, a spindle motor 30 to rotate the disk 20, and an actuator 40 having a magnetic head (not shown) to record data on the disk 20 and reproduce the data
from the disk 20. A shaft 32 of a spindle motor 30 is fixedly installed. A hub 36 is
rotatably installed at the outer circumference of the shaft 32 by interposing a bearing
34 between the hub 36 and the shaft 32. The disk 20 is inserted around the outer circumference of the hub 36. When a plurality of the disks 20 are installed, a ring type spacer 50 is inserted around the outer circumference of the hub 36 to maintain an interval between the disks 20. A parking zone 21 where a slider 42 on which a
magnetic head is mounted is disposed when the power is turned off and the disk stops rotating is provided at the inner circumferential side of the disk 20. A data zone 22 where data is stored is provided outside the parking zone 21. The actuator 40 includes an arm 46 installed in the hard disk drive to be capable of pivoting, and a suspension 44 installed at the arm 46 and supporting the slider 42 having the magnetic head to be elastically biased toward a surface of the disk 20. Since the slider 42 is lifted to a predetermined height from the disk 20 by a lifting force generated by the rotation of the disk 20, the magnetic head mounted on the slider 42 records and reproduces data with respect to the disk 20 while maintaining a predetermined interval from the disk 20 that is rotating.

In the hard disk drive having the above structure, a disk clamp 160 according to the present invention is used to fix the magnetic disk (hard disk) 20 which is a recording medium for recording data to the spindle motor 30 of the hard disk drive.

The disk clamp 160 includes a pressing portion 168 formed at an outer circumferential portion of the disk clamp 160, a stress distribution portion 166 formed at the inner side of the pressing portion 168, and a plurality of screw coupling holes 164 provided inside the stress distribution portion 166. An opening hole 162 into which the shaft 32 of the spindle motor 30 is inserted can be formed at the center portion of the disk clamp 160, that is, inside the screw coupling holes 164.

The pressing portion 168 is formed throughout the entire edge portion along the outer circumference of the disk clamp 160 to press the upper surface of the disk 20 in a vertical direction. Although the pressing portion 168 may have a flat shape, preferably, it can have a profile of being bulged downward as shown in the drawing.

A plurality of the screw coupling holes 164 are arranged at a predetermined interval in a direction along the circumference of the disk clamp 160. A screw 170 coupled to the upper end portion of the spindle motor 30 is inserted in the screw coupling hole 164. In FIG. 5, eight screw coupling holes 164 are shown while four screws 170 are shown. Since this is a mere example of the present invention, the screw coupling holes 164 and the screw 170 can be provided in various numbers. Also, every screw coupling hole 164 is not required to be coupled by the screw 170. That is, as shown in FIG. 5, only four screws 170 can be coupled to every other screw coupling holes 164.

The stress distribution portion 166 is formed to have a profile having a shape bulged upward between the pressing portion 168 and the screw coupling hole 164 to distribute stress applied to the disk 20 in a circumferential direction. Although not shown in the drawing, not only one stress distribution portion but also two or more stress distribution portions can be continuously formed.

As shown in FIG. 6, the disk clamp 160 preferably has a dome shape such that the center portion thereof is bulged upward as a whole. The disk clamp 160 having the above shape, as shown in FIG. 7, is deformed to be flat as a whole because the bulged center portion is pressed by the screw 170 when the screw 170 is coupled to the spindle motor 30. Such deformation of the disk clamp 160 makes the clamping force by the screw 170 transferred to the disk 20 more reliably.

When the screw 170 is coupled to the upper end portion of the spindle motor 30, the clamping force is transferred to the pressing portion 168 via the stress distribution portion 166 that is curved. The pressing portion 168 contacts the upper surface of the disk 20 and presses the disk 20 downward in a vertical direction. Thus, the stress is applied to a portion of the disk 20 contacting the pressing portion 168. In other words, stress due to the clamping force concentrates on the screw coupling hole 164 coupled to the screw 170. Thus, the stress is irregularly distributed in the circumferential direction around the screw coupling hole 164. The stress is transferred to the stress distribution portion 166 that is curved. That is, the bending radius R₁ of the stress distribution portion 166 increases slightly. The stress transferred to the curved stress distribution portion 166 is absorbed by the stress distribution portion 166 during the deformation step and distributed in the circumferential direction. Then, the distributed stress is transferred to the pressing portion 168 and the pressing portion 168 presses the disk 20. Accordingly, the stress generated by the clamping force of the screw 170 is not transferred directly to the pressing portion 168 but distributed by the stress distribution portion 166 in the circumferential direction and then transferred to the pressing portion 168. Thus, the stress applied to the disk 20 is uniformly distributed in the circumferential direction.

As described above, the stress applied to the disk 20 can be uniformly distributed in the circumferential direction by the disk clamp 160 according to the present invention. Thus, flatness of the disk 20 is improved so that vibration of the disk 20 is lowered and data recording/reproduction ability of the magnetic head and reliability thereof are improved.

Also, since the disk clamp 160 according to the present invention has the same shape and thickness along the circumferential direction, a uniform stress distribution operation can be performed regardless of the number of the screws 170 coupled to the screw coupling hole 164. Thus, the disk clamp 160 according to the present invention can be commonly used for various types of hard disk drives without changing design, unlike the conventional disk clamp 90 of FIG. 4A.

The disk clamp 160 preferably has the same thickness throughout the entire portion thereof. This is to prevent stress from concentrating on any one portion of the disk clamp 160, that is, a thin portion, during the step of transferring the stress to the disk via the disk clamp 160. Also, the pressing portion 168 is preferably formed to be continuous at the stress distribution portion 168. Thus, the deformation of the stress distribution portion 166 and the pressing portion 168 are correlated, and the stress can be smoothly transferred from the stress distribution portion 166 to the pressing portion 168.

FIG. 8 is a graph showing the result of comparison of the distribution of stress acting on the disk in the circumferential direction of the disk by the disk clamp between the present invention and the conventional technology.

In the graph of FIG. 8, a vertical axis indicates a vertical stress applied to the disk at a portion where the pressing portion of the disk clamp contacts the disk. A horizontal axis indicates a position in the circumferential direction of the disk. In this test, since the disk clamp is coupled by four screws at an interval of 90°, a position at an angle of 45° on the vertical axis indicates a portion where the screws are coupled and positions at angles of 0° and 90° indicate portions where the screws are not coupled. R₁ denotes a radius of the curve of the stress distribution portion and R₂ denotes a radius of the curve of the pressing portion (refer to FIG. 6). Thus, that R₁ is indicated as "0" shows the result of a test using the conventional disk clamp where no stress distribution portion exists while that R₁ is greater than or equal to R₂ shows the result of a test using the disk clamp according to the present invention.

Referring to the graph of FIG. 8, when the disk clamp according to the present invention (R₁=R₂ and R₁>R₂), it can be seen that a difference between the maximum and minimum stress is considerably reduced compared to a case in which the conventional disk clamp is used (R₁=0). In particular, when a disk clamp in which R₁ is greater than R₂ is used, it can be seen that a deviation in the stress according to positions is smallest.

As a result, it can be said that a disk clamp having the radius R₁ of the curve of the stress distribution portion which is greater than or equal to the radius R₂ of the curve of the pressing portion shows a superior stress distribution effect.

Referring back to FIGS. 5 and 6, since the disk clamp 160 according to the present invention has the same thickness throughout the entire portion thereof, the disk clamp 160 can be manufactured by a pressing process. That is, by cutting a metal plate member exhibiting a predetermined elasticity, for example, aluminum or stainless steel, into a circle, and performing a pressing process, the constituent elements of the disk clamp 160, that is, the stress distribution portion 166, the pressing portion 168, the screw coupling hole 164, and the opening hole 162, can be simultaneously formed. Thus, in the disk clamp 160 according to the present invention, manufacturing costs can be reduced compared to the conventional disk clamp in which the constituent elements are manufactured through a mechanical process.

As described above, in the disk clamp of a hard disk drive according to the present invention, since the stress applied to the disk can be uniformly distributed in the circumferential direction of the disk by the stress distribution portion, the flatness of the disk is improved. Accordingly, vibration of the disk is reduced and the data recording/reproduction ability by the magnetic head and reliability thereof are improved. Also, the disk clamp of the present invention can be commonly used for various types of hard disk drives. Furthermore, since the disk clamp of the present invention can be manufactured by press processing a metal material, so that the manufacture of the disk clamp is relatively simple and the manufacturing cost can be reduced.

While this invention has been particularly shown and described with reference to preferred embodiments thereof, it will be understood by those skilled in the art that various changes in form and details may be made therein without departing from the scope of the invention as defined by the appended claims.

## Claims

1. A disk clamp (160) of a hard disk drive for fixing a magnetic disk (20) for storing data to a spindle motor (30) of the hard disk drive, the disk clamp (160) comprising:
a pressing portion (168) formed along an outer circumference of the disk clamp (160) at around an edge portion, to press an upper surface of the disk (20) in a vertical direction;
a stress distribution portion (166) formed inside the pressing portion (168) to have a profile having a curved shape bulged upward to distribute stress applied to the disk (20); and
a plurality of screw coupling holes (164) into which screws (170) are inserted to be coupled to an upper end portion of the spindle motor (30) and provided at a predetermined distance in the circumferential direction inside the stress distribution portion (166), and **characterised by**
a radius (R1) of the curve of the stress distribution portion (166) greater than or equal to a radius (R2) of the curve of the pressing portion (168).

2. The disk clamp (160) as claimed in claim 1, wherein the pressing portion (168) has a profile having a curved shape bulged downward.

3. The disk clamp (160) as claimed in claim 2, wherein the pressing portion (168) is continuously formed at the stress distribution portion (166).

4. The disk clamp (160) as claimed in claim 1, wherein the disk clamp (160) has the same thickness throughout the entire portion of the disk clamp (160).

5. The disk clamp (160) as claimed in claim 1, wherein the disk clamp (160) has a dome shape whose center portion is bulged upward as a whole and, when the disk clamp (160) is coupled to the spindle motor (30) by the screws (170), the disk clamp (160) is made flat as a whole.

6. The disk clamp (160) as claimed in claim 1, wherein the disk clamp (160) is manufactured by press processing a metal material having a predetermined elasticity.

## Patentansprüche

1. Platten-Klemmvorrichtung (160) eines Festplattenlaufwerks zum Fixieren einer Magnetplatte (20) zum Speichern von Daten an einem Spindelmotor (30) des Festplattenlaufwerks, wobei die Platten-Klemmvorrichtung (160) umfasst:
einen Pressabschnitt (168), der entlang eines Außenumfangs der Platten-Klemmvorrichtung (160) um einen Kantenabschnitt herum ausgebildet ist, um eine obere Fläche der Platte (20) in einer vertikalen Richtung zu pressen;
einen Spannungsverteilungsabschnitt (166), der im Inneren des Pressabschnitts (168) so ausgebildet ist, dass er ein Profil mit einer gekrümmten Form aufweist, die nach oben gewölbt ist, um auf die Platte (20) wirkende Spannung zu verteilen; und
eine Vielzahl von Schraubenverbindungslöchern (164), in die Schrauben (170) eingeführt sind, um sie mit einem oberen Endabschnitt des Spindelmotors (30) zu verbinden, und die in einem vorgegebenen Abstand in der Umfangsrichtung innerhalb des Spannungsverteilungsabschnitts (166) vorhanden sind, **dadurch gekennzeichnet, dass**
ein Radius (R1) der Krümmung des Spannungsverteilungsabschnitts (166) größer ist als oder genauso groß wie ein Radius (R2) der Krümmung des Pressabschnitts (168).

2. Platten-Klemmvorrichtung (160) nach Anspruch 1, wobei der Pressabschnitt (168) ein Profil mit einer gekrümmten Form aufweist, die nach unten gewölbt ist.

3. Platten-Klemmvorrichtung (160) nach Anspruch 2, wobei der Pressabschnitt (168) durchgehend an dem Spannungsverteilungsabschnitt (166) ausgebildet ist.

4. Platten-Klemmvorrichtung (160) nach Anspruch 1, wobei die Platten-Klemmvorrichtung (160) über den gesamten Abschnitt der Platten-Klemmvorrichtung (160) die gleiche Dicke hat.

5. Platten-Klemmvorrichtung (160) nach Anspruch 1, wobei die Platten-Klemmvorrichtung (160) eine Glockenform hat, deren mittlerer Abschnitt insgesamt nach oben gewölbt ist, und, wenn die Platten-Klemmvorrichtung (160) durch die Schrauben (170) mit dem Spindelmotor (30) verbunden ist, die Platten-Klemmvorrichtung (160) als Ganzes flach ist.

6. Platten-Klemmvorrichtung (160) nach Anspruch 1, wobei die Platten-Klemmvorrichtung (160) durch Pressbearbeitung eines Metallmaterials mit einer vorgegebenen Elastizität hergestellt wird.

## Revendications

1. Dispositif de serrage de disque (160) d'un lecteur de disque dur pour fixer un disque magnétique (20) pour mémoriser des données à un moteur à broche (30) du lecteur de disque dur, le dispositif de serrage de disque (160) comprenant :
une partie de pression (168) formée le long d'une circonférence extérieure du dispositif de serrage de disque (160) autour d'une partie de bord, pour presser une surface supérieure du disque (20) dans une direction verticale ;
une partie de répartition de contrainte (166) formée à l'intérieur de la partie de pression (168) de manière à avoir un profil de forme incurvée bombée vers le haut pour répartir une contrainte appliquée au disque (20) ; et
une pluralité de trous d'accouplement de vis (164) dans lesquels des vis (170) sont insérées pour être accouplées à une partie d'extrémité supérieure du moteur de broche (30) et prévus à une distance prédéterminée dans la direction circonférentielle à l'intérieur de la partie de répartition de contrainte (166), et **caractérisé par**
un rayon (R1) de la courbe de la partie de répartition de contrainte (166) supérieur ou égal à un rayon (R2) de la courbe de la partie de pression (168).

2. Dispositif de serrage de disque (160) selon la revendication 1, dans lequel la partie de pression (168) a un profil de forme incurvée bombée vers le bas.

3. Dispositif de serrage de disque (160) selon la revendication 2, dans lequel la partie de pression (168) est formée de manière continue au niveau de la partie de répartition de contrainte (166).

4. Dispositif de serrage de disque (160) selon la revendication 1, dans lequel le dispositif de serrage de disque (160) a la même épaisseur tout au long de la partie entière du dispositif de serrage de disque (160).

5. Dispositif de serrage de disque (160) selon la revendication 1, dans lequel le dispositif de serrage de disque (160) a la forme d'un dôme dont la partie centrale est bombée vers le haut dans son ensemble et, lorsque le dispositif de serrage de disque (160) est accouplé au moteur de broche (30) par les vis (170), le dispositif de serrage de disque (160) est aplati dans son ensemble.

6. Dispositif de serrage de disque (160) selon la revendication 1, dans lequel le dispositif de serrage de disque (160) est fabriqué par traitement à la presse d'un matériau métallique ayant une élasticité prédéterminée.
